# EUROPEAN PATENT SPECIFICATION

(11) **EP 0 451 815 B1**
(45) Date of publication and mention of the grant of the patent: **02.11.1994**
(21) Application number: 91105689.3
(22) Date of filing: 10.04.1991
(51) Int. Cl.: C04B 18/12

(54) **Inert material for concretes or mortars, process for the manufacture thereof and concretes or mortars containing same**
Inertes Material für Betone oder Mörtel, Verfahren zu seiner Herstellung und dieses enthaltende Betone oder Mörtel
Matière inerte pour bétons ou mortiers, son procédé de fabrication et bétons ou mortiers

(30) Priority: 11.04.1990 IT 2000690
(43) Date of publication of application: 16.10.1991
(73) Proprietor: CONTENTO TRADE S.A.S. di CIOFFI ILARIA, Valpicetto di Rigolato, Udine (IT)
(72) Inventor: Contento, Maria Pia, I-33100 Udine (IT); Cioffi, Flavio, I-33100 Udine (IT)
(74) Representative: Gervasi, Gemma, Dr.

(56) References cited:
- SOVIET INVENTIONS ILLUSTRA- TED, CH section, week A 47, January 10, 1979DERWENT PUBLICATIONS LTD., London
- SOVIET INVENTIONS ILLUSTRA- TED, I section Chemical, vol. V. No. 08, March 28,1974 DERWENT PUBLICATIONS LTD., London

## Description

The present invention relates to a greyified inert material for concretes or mortars, to a process for the manufacture thereof and to the concretes or mortars containing said inert material.

As is known, granite processing such as block sawing, plate grinding and the like, results in large amounts of slurries which have to be disposed of without giving rise to ecological problems.

It has now been found that by treating the slurries coming from a granite processing in a particular manner an inert material can be obtained which can be used in combination with hydraulic binders (such as cement, lime, gypsum and anhydrite), for the manufacture of mortars or concretes showing a high compression strength/specific gravity ratio, a high abrasion resistance and chemical resistance and a low permeability to water.

Accordingly, the present invention provides a greyified inert material for concretes or mortars obtainable by a process comprising the steps of:
(a) collecting the slurries coming from a granite processing;
(b) partly drying said slurries up to a water content of from 10 to 20% by weight;
(c) shaping the thus dried slurry into granules having an essentially spheroidal shape; and
(d) baking the thus obtained granules in a non-static kiln;

optionally in the presence of melting and/or strengthening and/or expanding agents.

The drying of the slurries is preferably carried out in open rooms by natural evaporation of the water or by forced evaporation. In the latter case the slurries are conveyed to heated (for instance at 80-100°C) closed rooms and the formed steam is removed by suction (in this case the drying room is subjected to a slight vacuum) or by ventilation.

The partly dried slurry is granulated in order to obtain spherules (having diameters preferably ranging from about 0.1 to 20 mm) by using methods and devices which are well known to those skilled in the art (rotary plate, rotary blade granulation, etc.).

The thus obtained granules are baked at a temperature of preferably at least 500°C, particularly from about 1000 to about 1200°C, and for baking times, at the highest temperature, of preferably not more than 10 minutes, generally of from 3 to 7 minutes. It is preferred that the granules reach the highest baking temperature gradually, e.g., over about 2 to 3 minutes, and that they are gradually brought back to room temperature, e.g., by using cooling times of at least about 10 minutes, preferably of about 15 to about 30 minutes.

Any kiln capable of baking an inert material under non-static conditions can be used for preparing the inert material of the present invention, although rotary kilns are preferred since they allow a very uniform baking of the granules.

Melting and/or strengthening agents, and optionally also materials capable of expanding the granules during the baking, can be added to the slurry already before the drying step.

More particulary, it is preferred to add to the slurry 0 to 40% by weight, calculated on the total amount, of at least one melting agent, particularly a melting agent selected from metal oxides and metal salts (such as sodium hydroxide, sodium carbonate, potassium oxide, potassium carbonate, chromium oxide, lead oxide and sodium silicate), low-melting clays, powdered glass, slurries coming from a ceramic processing etc.;
0 to 40% by weight, calculated on the total amount, of at least one strengthening agent, particularly a strengthening agent selected from siliceous sands, blast furnace slags, foundry slags or sands, strong brickwork clays, kaolin, calcium oxide and organic compounds, such as calcium lignosulfonate etc.;
0 to 30% by weight, calculated on the total amount, of at least one expanding agent, particularly an expanding agent selected from carbonatic rocks (such as marbles or dolomite, carbon or carbon schists), sulphatic rocks (such as gypsum) and the like.

Said additives are generally used, if they are not soluble in water, with a very fine granulometry (generally below about 0.1 mm).

The inert material of the present invention shows a specific gravity of from 400 to 3,000 kg/m³, generally of from 700 to 2,500 kg/cm³;
a compression strength (measured according to UNI 8520/17) of not more than 150 N/mm², in particular of from 1.5 to 150 N/mm²;
a water absorption (measured according to UNI 8520/16) of less than 3% by weight, generally of from 0 to 1% by weight; and a chemical resistance according to UNI EN 106.

A preferred process for preparing the inert material of the present invention comprises the steps of
(i) partly drying the slurries coming from a granite processing up to a water content of from 10 to 20% by weight;
(ii) granulating the partly dried slurries into spherules having a preferred diameter ranging from 0.1 to 20 mm;
(iii) baking the granules in a non-static kiln, preferably at a temperature of at least 500°C and for baking times at the highest temperature of not more than 10 minutes.

The inert material of the present invention allows to obtain concretes or mortars which are abrasion resistant and have a low permeability to water and a high compression strength/specific gravity ratio. Accordingly, said inert material can be used to replace, completely or partly, the inert materials for manufacturing special concretes such as spheroidal quartz, expanded clay, phyllite and the like.

More particularly the inert material of the present invention may be mixed with a hydraulic binder (such as cement, lime, gypsum, anhydrite and the like), preferably in amounts ranging from 50 to 95 and particularly from 60 to 80% by weight, based on the total weight of the mixture.

The following examples are to further illustrate the present invention without limiting the scope thereof.

### EXAMPLE 1

A greyified inert material was prepared by using slurries coming from the sawing of granite blocks, carried out at Carrara (company Technostone). The slurry was partly dried by natural evaporation up to a water content of 12% by weight.

The thus dried slurry was granulated in a rotary plate machine in order to obtain the following granulometric distribution:

| | |
|---|---|
| up to 0.3 mm: | 36% by weight; |
| 0.4-1 mm: | 45% by weight; |
| 1-4 mm: | 19% by weight. |

The above granules were conveyed into a rotary kiln, heated to 1,150°C over 3 minutes, kept at this temperature for 5 minutes, and thereafter were brought back to room temperature over about 20 minutes.

Ths thus obtained inert material showed a specific gravity of 2,500 kg/cm³, a compression strength of 140 N/mm² and a water absorption of 0.1% by weight and resisted the chemical attack of 50% sulphuric acid.

5 parts by weight of the thus prepared inert material were mixed with 1 part by weight of Portland cement (class 425) and with 36% by weight, with respect to the cement, of water.

From said mixture prismatic specimens (40 x 40 x 160 mm) were prepared and then aged for 28 days at 20°C and 80% relative humidity.

The compression strength thereof, measured according to UNI 6132, was 95.5 N/mm².

### EXAMPLE 2

The inert material of example 1 was used for preparing a mixture containing
2 parts by weight of Portland cement (class 425),
5 parts by weight of inert material and
34% by weight, with respect to the cement, of water.

By operating as in example 1 specimens were prepared and the compression strength thereof was 107.5 N/mm².

## Claims

1. Inert material for concretes or mortars, obtainable by a process comprising the steps of
(a) collecting the slurries coming from a granite processing;
(b) drying said slurries up to a water content of from 10 to 20% by weight;
(c) shaping the slurry of step (b) into granules having an essentially spheroidal form; and
(d) baking said granules in a non-static kiln;
optionally in the presence of melting and/or strengthening and/or expanding agents.

2. Material according to claim 1, wherein the granules have a diameter ranging from about 0.1 to about 20 mm.

3. Material according to any one of claims 1 and 2, wherein the granules are baked at a temperature of at least 500°C and for not more than 10 minutes at the highest baking temperature employed.

4. Material according to any one of the preceding claims, wherein the non-static kiln for baking the granules is a rotary kiln.

5. Material according to any one of the preceding claims, wherein to the slurries are added
0 to 40% by weight, based on the total amount, of at least one melting agent;
0 to 40% by weight, based on the total amount, of at least one strengthening agent;
0 to 30% by weight, based on the total amount, of at least one expanding agent.

6. Material according to any one of the preceding claims showing
a specific gravity of from 400 to 3,000 kg/m³,
a compression strength (measured according to UNI 8520/17) of not more than 150 N/mm²,
a water absorption (measured according to UNI 8520/16) below 3% by weight and
a resistance to chemical attack according to UNI EN 106.

7. Process for preparing the inert material according to any one of claims 1 to 6, comprising the steps of
(i) drying the slurries coming from a granite processing up to a water content of 10 to 20% by weight;
(ii) granulating the partly dried slurries of step (i) into spherules having a preferred diameter of from about 0.1 to about 20 mm;
(iii)baking the granules in a non-static kiln, preferably at a temperature of at least 500°C and for baking times at the highest temperature of not more than 10 minutes.

8. Use of the material according to any one of claims 1 to 6, in admixture with hydraulic binder, for the manufacture of concretes and mortars.

9. Use according to claim 8, wherein the inert material is employed in amounts of from 50 to 90% by weight, based on the total weight of the mixture.

10. Concrete or mortar, containing the inert material according to any one of claims 1 to 6.

## Patentansprüche

1. Aus einem Verfahren erhältliches inerte Material für Betone oder Mörtel, wobei dieses Verfahren die folgenden Stufen enthält:
(a) Sammlung des Schlammes aus der Granitverarbeitung;
(b) Trocknen des obengenannten Schlammes bis zu einem Wassergehalt von 10 bis 20% im Gewicht;
(c) Modellierung des Schlammes von Stufe (b) in Körnchen, die eine grundsätzlich kugelförmige Form haben; und
(d) Brennen der obengenannten Körnchen in einem unstatischen Brennofen;
gegebenfalls in Gegenwart von Fluß- und/oder Verhärtungs- und/oder Ausdehnungsmitteln.

2. Material nach Anspruch 1, dadurch gekennzeichnet, daß die Körnchen einen Durchmesser von 0,1 bis 20 mm haben.

3. Material nach Anspruch 1 oder 2, dadurch gekennzeichnet, daß die Körnchen bei mindestens 500°C und nicht länger als 10 Minuten bei der höchsten Brenntemperatur gebrannt werden.

4. Material nach einem der vorhergehenden Ansprüche, dadurch gekennzeichnet, daß der unstatische Brennofen zum Brennen der Körnchen ein rotierender Brennofen ist.

5. Material nach einem der vorhergehenden Ansprüche, dadurch gekennzeichnet, daß
0 bis 40% im Gewicht (gerechnet aus dem Gesamtanzahl) von mindestens einem Flußmittel;
0 bis 40% im Gewicht (gerechnet aus dem Gesamtanzahl) von mindestens einem Verhärtungsmittel;
0 bis 30% im Gewicht (gerechnet aus dem Gesamtanzahl) von mindestens einem Ausdehnungsmittel
dem Schlamm hinzugefügt werden.

6. Material nach einem der vorhergehenden Ansprüche, dadurch gekennzeichnet, daß es
ein spezifisches Gewicht von 400 bis 3000 kg/m³,
eine Druckkraft (gerechnet nach UNI 8520/17) nicht höher als 150 N/mm²,
eine Wasserabsorption (gerechnet nach UNI 8520/16) unter 3% im Gewicht und
einen Widerstand gegen Chemikalien nach UNI EN 106 zeigt.

7. Verfahren zur Herstellung des inerten Materials nach einem der Ansprüche 1 bis 6, das die folgenden Stufen enthält:
(i) Trocknen des Schlammes aus einer Granitverarbeitung bis zu einem Wassergehalt von 10 bis 20% im Gewicht;
(ii) Granulierung von teilweise getrocknetem Schlamm von Stufe (i) in Körnchen, die einen vorzugsweise Durchmesser von ca. 0.1 bis 20 mm haben;
(iii) Brennen der obengenannten Körnchen in einem unstatischen Brennofen, die vorzugsweise bei mindestens 500°C und bei der höchsten Temperatur nicht länger als 10 Minuten gebrannt werden.

8. Gebrauch vom Material nach einem der Ansprüche 1 bis 6, zusammen mit einem hydraulischen Binder zur Herstellung von Betone oder Mörtel.

9. Gebrauch nach Anspruch 8, dadurch gekennzeichnet, daß das inerte Material in Mengen von 50 bis 90% im Gewicht, gerechnet aus dem Gesamtanzahl der Mischung, benutzt wird.

10. Betone oder Mörtel, die das inerte Material nach einem der Ansprüche 1 bis 6 enthalten.

## Revendications

1. Matière inerte pour bétons ou mortiers obtenue par un procédé comprenant les phases suivantes :
(a) recueillir les bornes provenantes du travail du granit;
(b) sécher lesdites boues jusqu'à atteindre un contenu d'eau de 10-20% en poids;
(c) donner aux boues de phase (b) la forme de granules ayant une forme essentiellement sphérique; et
(d) cuire lesdites granules dans un four non-statique;
éventuellement en présence d'agents fondants et/ou renforçants et/ou dilatants.

2. Matière selon la revendication 1, caracterisée en ce que les granules ont un diamètre d'environ de 0,1 à 20 mm.

3. Matière selon l'une quelconque des revendications 1 et 2, caracterisée en ce que les granules sont cuites à au moins 500°C et pour non plus de 10 minutes à la temperature de cuite la plus haute.

4. Matière selon l'une quelconque des revendications précédentes, caracterisée en ce que le four non-statique pour cuire les granules c'est un four rotatoire.

5. Matière selon l'une quelconque des revendications précédentes, caracterisée en ce que aux boues sont ajoutés
de 0 à 40% en poids (calculé sur la quantité totale) d'au moins un agent fondant;
de 0 à 40% en poids (calculé sur la quantité totale) d'au moins un agent renforçant;
de 0 à 30% en poids (calculé sur la quantité totale) d'au moins un agent dilatant.

6. Matière selon l'une quelconque des revendications précédentes montrant
un poids spécifique de 400 à 3000 kg/m³,
une force de compression (calculée selon l'UNI 8520/17) non superieure à 150 N/mm²,
une absorption d'eau (calculée selon l'UNI 8520/16) au dessous du 3% en poids et
une résistance aux produits chimiques selon l'UNI EN 106.

7. Procédé de fabrication de la matière inerte selon l'une quelconque des revendications de 1 à 6, comprenant les phases suivantes:
(i) sécher les boues provenantes du travail du granit jusqu'à atteindre un contenu en eau de 10 à 20% en poids;
(ii) granuler les bornes partiellement sechées de phase (i) en granules ayant un diamètre préféré d'environ de 0,1 à 20 mm;
(iii) cuire les granules dans un four non-statique, préférablement à au moins 500°C et pour non plus de 10 minutes à la temperature de cuite la plus haute.

8. Utilisation de la matière selon l'une quelconque des revendications de 1 à 6, avec un liant hydraulique pour la fabrication de bétons et mortiers.

9. Utilisation selon la revendication 8, caracterisée en ce que la matière inerte est utilisée en quantités de 50 à 90% en poids, calculé sur le poids total du mélange.

10. Béton ou mortier contenant la matière inerte selon l'une quelconque des revendications de 1 à 6.
